# EUROPEAN PATENT SPECIFICATION

(11) **EP 1 542 031 B1**
(45) Date of publication and mention of the grant of the patent: **30.05.2007**
(21) Application number: 04028978.7
(22) Date of filing: 07.12.2004
(51) Int. Cl.: G01S 5/00, G08G 1/123, H04Q 7/38, G08B 15/00

(54) **System and method of offering data relating to a specific location of a device to a requesting terminal**
Vorrichtung und Verfahren des Anbietens von auf die Position eines Gerätes bezogener Daten an ein abfragendes Endgerät
Système et procédé d'offre des données relatives à la position d'un dispositif à un terminal demandeur

(30) Priority: 09.12.2003 JP 2003410213
(43) Date of publication of application: 15.06.2005
(73) Proprietor: NEC CORPORATION, Tokyo (JP)
(72) Inventor: Nishizawa, Sadaomi, Tokyo (JP)
(74) Representative: von Samson-Himmelstjerna, Friedrich

(56) References cited:
- EP-A- 1 233 387
- EP-A- 1 321 742
- WO-A-01/72078
- WO-A-02/17656
- DE-A1- 4 423 328
- US-A1- 2002 188 522
- US-A1- 2003 001 743
- US-A1- 2004 073 687
- US-B1- 6 377 210
- US-B1- 6 584 320

## Description

### BACKGROUND OF THE INVENTION

### Field of the Invention

The present invention relates to a data delivery apparatus for delivering data, a data delivery system, a server, a data delivery method, a communication device and an electronic apparatus.

In particular, the present invention relates to a data delivery apparatus for delivering, for example, at least one of image data and audio data from an electronic apparatus such as a mobile terminal installed in a vehicle, a data delivery system, a server, a data delivery method, a communication device and an electronic apparatus.

### Description of the Related Art

As for a system for capturing (grasping) an image of a periphery (situation) of the outside of a vehicle, an image pickup system is proposed which is adapted to readily acquire image information of an arbitrary place with an image pickup device installed in a vehicle (refer to JP 2003-198905 A, pp. 4 and 5, and Fig. 1).

In the image pickup system disclosed in JP 2003-198905 A, for example, when a user wants to know a situation of traffic congestion, a road surface and the like in a certain point in the middle of a route leading to the destination of a vehicle, the user accesses an information center (server) and also transmits location data (image pickup request location data) an image of which a server is requested to capture is transmitted to the server using a terminal which the user possesses.

The server retrieves a vehicle (more specifically, an on-vehicle device which has a GPS function and which is installed in a vehicle) existing within a predetermined distance from the image pickup request location data inputted thereto. The server transmits an instruction signal to instruct an image pickup device installed in the retrieved vehicle to capture an image of the image pickup request location to the image pickup device installed in the retrieved vehicle. The image pickup device which has received the instruction signal executes an image pickup processing in the image pickup request location.

After the server receives image data obtained through the image pickup processing by the image pickup device, the server transmits the image data to a terminal of the user. The terminal of the user instructs a display device to display thereon the received image data to provide a perusal possible state.

That is to say, in the above-mentioned image pickup system, the server receives the image pickup request location data in advance, the image pickup device captures an image of the situation (scene) of the periphery of the image pickup request location when the vehicle having the image pickup device installed therein passes the image pickup request location, and the image data obtained through the image pickup processing is displayed on the display device of the terminal of the user.

In addition, a data transmission/reception system which is capable of readily acquiring a situation of a desired location on a way of the vehicle having a terminal (information request terminal) for requesting information installed therein is conventionally proposed (refer to JP 2001-339334 A, Figs. 1 and 10). The information request terminal transmits request information containing desired search location information to a base station (server), and receives image information corresponding to the request information (search location information) from the server.

On the other hand, the server retrieves an information offerterminal (includinganimagepickupdevice) existingwithin a predetermined radius with a search location as a center in correspondence to search location information contained in the request information. The information offer terminal transmits to the server image information obtained through the image pickup processing in the server location with the image pickup device. That is to say, the information offer terminal, upon request from the server, acquires the image information with the image pickup device, e.g., a video camera to transmit the resultant image information to the server. Thereafter, the server transmits the image information transmitted thereto to the information request terminal.

Moreover, a communication system for a vehicle which is capable of, when a vehicle accident occurs, preserving image data obtained by recording information related to this situation in the outside is conventionally proposed (refer to JP 2002-166803 A, Figs. 3 to 5).

In the above-mentioned communication system for a vehicle, when a mobile terminal is connected to a box (on-vehicle device) , a control circuit can instruct a charge-coupled device (CCD) camera disposed separately from the mobile terminal to successively capture an image of a periphery (situation) of the outside of the vehicle, and can instruct a recorder within the on-vehicle device to record therein the image data obtained through the image pickup processing with the CCD camera.

When the above-mentioned control circuit detects an accident with a shock sensor connected to the on-vehicle device, the mobile terminal connected to the on-vehicle device calls a data recording center (server) to transmit (preserve) image data recorded in the above-mentioned recorder to (in) the server.

In recent years, wireless terminals, such as a mobile terminal, having a CCD camera installed therein have come into wide use. As for such wireless terminals, one of a type in which a CCD camera coping with mega-pixels (a million of pixels) , one of a type including a visual telephone function or a moving image delivery function, and the like have come onto the market.

In addition, there is also conventionally known a moving image delivery technique in which image information obtained through the image pickup processing with the CCD camera is encoded into image encoded data (which, for example, is transferred in accordance with a Real-Time Transport Protocol (RTP) /a Real Time Streaming Protocol (RTSP) ) by a streaming encoder, and also the image encoded data is stream-delivered to a wireless terminal (including a coder-recorder (CODEC)) connected to a communication network through a third-generation mobile telephone (3G)-324M (the standards for the audio visual communication used in 3G in NTT DoCoMo Inc. ) gateway for example.

However, in the system disclosed in JP 2003-198905 A or JP 2001-339334 A, the data of the vehicle located in the vicinity of the image pickup request location is not delivered to the terminal requesting the information (information request terminal). Hence, it is not clear whether or not a vehicle located in the vicinity of the image pickup request location exists. Thus, a time when the image data of the desired image pickup request location (search location) is acquired can not be estimated, which gives a user an uneasy feeling.

In addition, in the system disclosed in JP 2003-198905 A or JP 2001-339334 A, since the image pickup device dedicated to the vehicle is installed in the vehicle, the setting-up work and setting work for installing the image pickup device in the vehicle become complicated.

Note that JP 2002-166803 A merely discloses the vehicle communication system which is capable of, when a vehicle accident occurs, preserving the image data obtained by recording this situation in the outside (server) . That is to say, the vehicle communication systemdisclosed in JP 2002-166803 A is not a system for capturing an image of the situation of the traffic congestion or the road surface or the like in a point in the middle of the route of the vehicle as described above using an image pickup device of another vehicle located in the vicinity of the image pickup request location.

EP 1 321 742 A2 discloses a method and apparatus for arguiring position related a road map and/or a road condition map based on weather related data.

### SUMMARY OF THE INVENTION

In light of the foregoing, it is an object of the present invention to provide a communication device a data delivery system, and a data delivery method which are capable of making a dedicated image pickup device to be installed in a vehicle unnecessary, and of making a setting-up work and a setting work for the image pickup device easy.

To achieve the above objects, the invention provides a device, a system and a method as defined in the independent claims.

### BRIEF DESCRIPTION OF THE DRAWINGS

In the accompanying drawings:
FIG. 1 is a block diagram showing a configuration of a delivery system according to the present invention;
FIG. 2 is a schematic view showing a state in which a mobile terminal shown in FIG. 1 is installed in a holder;
FIG. 3 is a schematic view showing a place where the mobile terminal shown in FIG. 2 is installed in a vehicle;
FIG. 4 is a flow chart showing a flow of a processing executed in the mobile terminal shown in FIG. 1;
FIG. 5 is a flow chart showinga flowof a processing executed in the delivery system shown in FIG. 1;
FIG. 6 is a flow chart showing a flow of a processing executed in the mobile terminal set in a data request mode shown in FIG. 4;
FIG. 7 is a view showing a screen in which image data obtained through an information offer process is displayed on a display device shown in FIG. 2;
FIG. 8 is a view showing a state in which a mobile terminal according to the present invention is installed in a holder; and
FIG. 9 is a flow chart showing a flow of a processing executed in the mobile terminal shown in FIG. 8.

### DESCRIPTION OF THE PREFERRED EMBODIMENTS

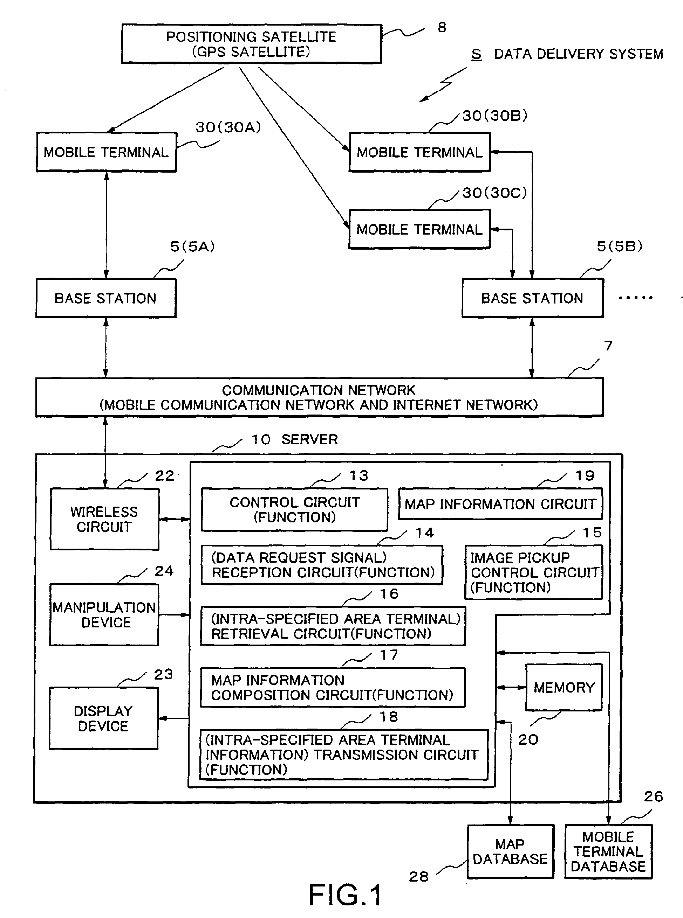

A data delivery system, a data delivery method and a communication apparatus will hereinafter be described in detail with reference to FIGS. 1 to 7.

### (Schematic Configuration of Communication Network in Data Delivery System)

As shown in FIG. 1, in a data delivery system S, a plurality of mobile terminals 30(30A, 30B, and 30C) are connected to a server 10 through base stations 5 (5A and 5B) , and a communication network 7 including a mobile communication network and the Internet network. The plurality of mobile terminals 30 are connected to the plurality of base stations (wireless base stations) 5 (5A and 5B), and the plurality of base stations 5A and 5B are connected to the communication network 7. The server 10 has a function for carrying out communications (transmission/reception) with the plurality of mobile terminals 30A, 30B, and 30C through the communication network 7.

Here, the mobile terminal 30A is located within a communicatable area of the base station 5A while the mobile terminals 30B and 30C are located within a communicatable area of the base station 5B. Note that the plurality of base stations 5A and 5B are connected to a switching center constituting a routing network through a base station control station (not shown) , and are connected to the communication network 7 through a gateway (not shown).

### (Configuration of Mobile Terminal)

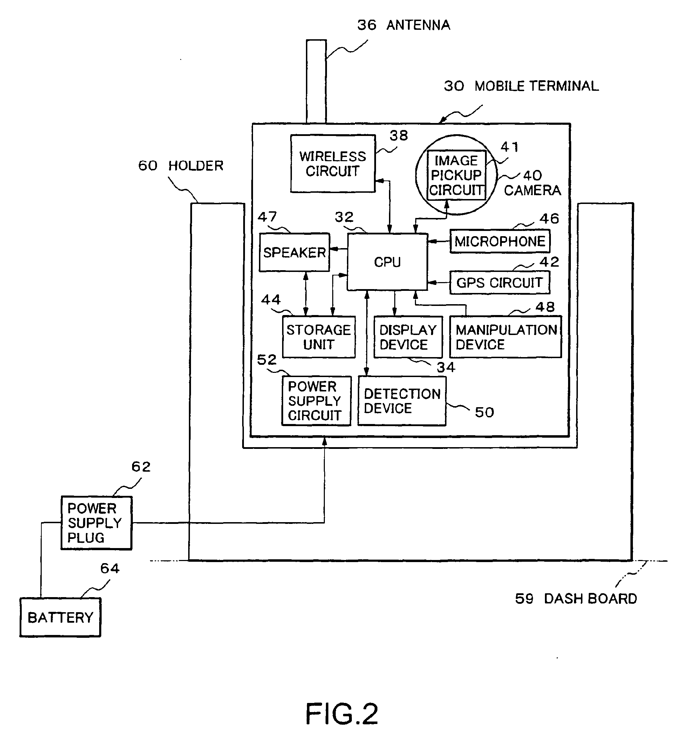

As shown in FIG. 2, the mobile terminal 30 includes a Central Processing Unit (CPU) 32 constituting control means (control circuit) , a Liquid Crystal Display (LCD) device 34 for displaying thereon the various kinds of information, and a wireless circuit 38 as wireless means connected to an antenna 36. In addition, the mobile terminal 30 includes a camera 40 as a part of image pickup means or data acquisition means, and an image circuit 41 for converting image data (having a concept containing still image data or moving image data) obtained through the image pickup processing with the camera 40 into image data to be displayed on the display device 34.

Moreover, the mobile terminal 30 includes a Global Positioning System (GPS) circuit 42 as a part of location data acquisition means, a storage unit (such as a ROM or a RAM) 44 as storage means, a microphone 46 for inputting a voice, a speaker 47 for outputting a voice, a manipulation device 48 constituting a part of mode switching means, a detection circuit 50 for detecting that the mobile terminal 30 is installed in the holder 60, and a power supply circuit 52 connected to a battery (not shown) .

Here, the power supply circuit 52 is connected to the CPU 32, the display device 34, and the like, and wirings thereof are distributed so as to be able to supply a power supply voltage to each of the constituent elements such as the CPU 32. Note that in FIG. 2, the wirings for the power supply circuit 52, the detection circuit 50, and the like are omitted in illustration for the sake of convenience. This reason is to prevent complication in a case where a plurality of wirings are distributed for the circuits and the like.

The GPS circuit 42 is a circuit (reception circuit) for detecting a location of the mobile terminal 30 by receiving electric waves from GPS satellites 8 shown in FIG. 1. That is to say, the GPS circuit 42 can acquire information related to latitude and longitude to detect a current location of the mobile terminal 30 by receiving electric waves from the GPS satellites 8. The location information of the mobile terminal 30 is then generated based on the current location of the mobile terminal 30 detected by the GPS circuit 42 to be stored in the storage unit 44.

Here, the GPS satellites 8 are a plurality (24) of geostationary satellites which were launched by the Department of Defense of U.S.A.. On the other hand, the mobile terminal 30 including the GPS circuit 42 receives the electric waves from four GPS satellites 8 to calculate distances between the mobile terminal 30 and the four GPS satellites 8, respectively, thereby specifying latitude, longitude, heights, and times. Then, the mobile terminal 30 transmits (notifies) the data of the current location measured by using the GPS satellites 8 to the server 10 through the base stations 5 and the communication network 7.

Note that while in this embodiment, the GPS is used as the means for acquiring the location data, a differential GPS (DGPS) or the like for enabling an error in location data to be smaller may also be used as the means for acquiring the location data. In addition, the manipulation device 48 includes the various keys such as a power supply key, a selection key, and a ten key for inputting characters.

The CPU 32 manages the overall operation of the mobile terminal 30, and when for example, a key (not shown) of the manipulation device 48 is manipulated, executes a processing based on this manipulation. The storage unit 44 includes a storage area for a program in accordance with which the various processings are executed, and for reading/writing of the various data. That is to say, the storage unit 44 includes the storage area such as a work area.

Then, the CPU 32 and the manipulation device 48 of the mobile terminal 30 have a function (firmware or software) of requesting the server 10 shown in FIG. 1 to search the mobile terminal 30B or 30C which can offer image data. In addition, the CPU 32 and the manipulation device 48 of the mobile terminal 30 have a function of selecting the selectable information offer mobile terminal 30B or 30C based on the retrieval results obtained by the server 10. Moreover, the camera 40 of the mobile terminal 30 has an image pickup function for generating image data through the image pickup processing for a subject.

On the other hand, the mobile terminal 30 communicates with the base station 5 shown in FIG. 1 through the antenna 36 and the wireless circuit 38 under the control of the CPU 32. That is to say, the wireless circuit 38 amplifies and demodulates a reception signal received at the antenna 36 to output the demodulated reception data to the CPU 32. Note that the wireless circuit 38 selects a signal frequency at which the reception is hoped, and executes a frequency conversion processing as well.

Thereafter, the CPU 32 converts the reception data into an audio (digital) signal to output the resultant audio signal obtained through the conversion processing to an audio processing circuit (not shown). The audio processing circuit converts the audio signal inputted thereto into an analog signal in the form of audio data to output the voice (data) through the speaker 47.

On the other hand, the audio processing circuit (not shown) converts a voice inputted through the microphone 46 shown in FIG. 2 into a digital signal and then converts the digital signal into transmission data. The wireless circuit 38 modulates and amplifies the transmission data in the form of a carrier wave having a specified frequency. The carrier wave obtained through the amplification in the wireless circuit 38 is transmitted through the antenna 36 shown in FIG. 1.

As shown in FIG. 2, a recess shaped installation portion 61 for installing (accommodating) therein a lower portion of a main body 31 of the mobile terminal 30 is formed in a holder 60. Thus, the mobile terminal 30 is installed in the holder 60 to be positioned in the holder 60.

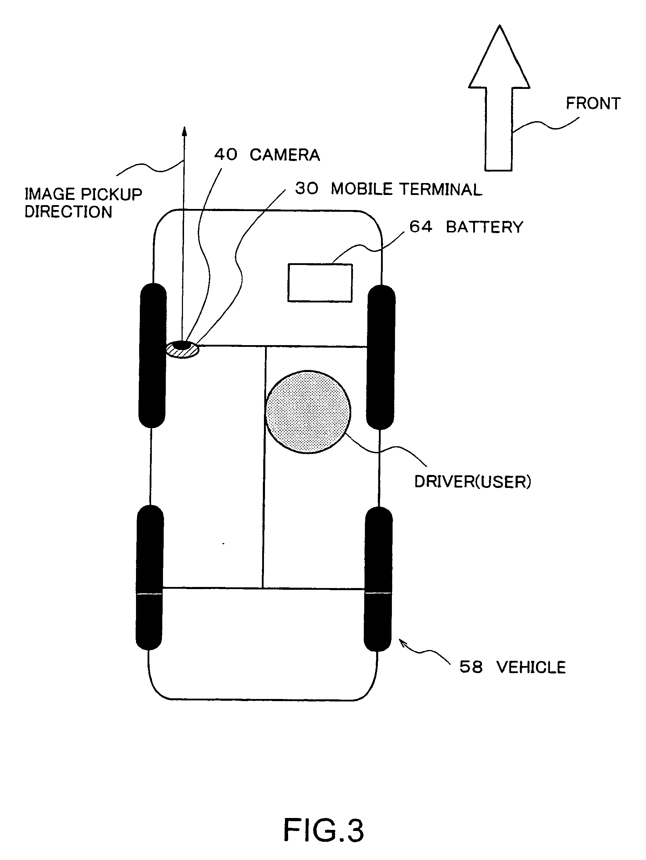

On the other hand, the holder 60 is positioned in a predetermined location on a dash board 59 (refer to a two-dot chain line of FIG. 2) on a side of an assistant driver's seat of a vehicle 58 shown in FIG. 3. The mobile terminal 30, when being installed in the holder 60, is disposed so that a direction (a direction indicated by an arrow of FIG. 3) of image pickup by the camera 40 of the mobile terminal 30 becomes a direction along which an image of the front can be captured through a front glass (so that the camera 40 is directed to the front (the front of the vehicle) for example when viewed from a seat). That is to say, the mobile terminal 30 captures an image of the front of the vehicle 58 with the camera 40, whereby it is possible to capture an image of situations (a traffic congestion, a road surface situation, the weather, and the like) related to the road in traveling or stop of the vehicle. Here, the vehicle 58 has a concept including a two-wheel barrow and the like in addition to a car, a taxi, a truck and the like.

Note that the installation place of the mobile terminal 30 '(the holder 60) is not intended to be limited to the example shown in FIG. 3, and hence this installation place can be changed to a dash board on the side of the driver's seat, or the vicinity of the roof at the center of the front side of the vehicle 58 for example. In addition, the holder 60 (the mobile terminal 30) installed in the vehicle 58 may also be disposed movably (rotatably or slidably).

Note that, so long as the mobile terminal 30 is installed in the holder 60, the CPU 32 of the mobile terminal 30 instructs the camera 40 or the like to execute the image pickup processing or the like in accordance with a signal (e.g., an image pickup control signal or the like) from the server 10. Hence, it is unnecessary for the possessor (e. g. , a user sitting in the driver's seat) himself/herself to carry out manually the setting operation.

In FIG. 2, a power supply plug 62 constituting a part of electric power supply means is connected to the holder 60. Then, when in a state in which the mobile terminal 30 is installed in the holder 60, the power supply plug 62 is connected to a connection circuit (e.g., a connection terminal in a cigarette or the like) via the battery 64 constituting a part of the on-vehicle electric power supply means, a suitable D. C. voltage (electric power) is applied (supplied) from the on-vehicle battery 64 to the power supply circuit 52 of the mobile terminal 30.

Then, when the detection circuit 50 of the mobile terminal 30 detects that the suitable D.C. voltage is applied to the power supply circuit 52, the CPU 32 judges that the mobile terminal 30 is installed in the holder 60. That is to say, the mobile terminal 30 installed in the holder 60 is mode-set as a mobile terminal which can offer data (information offer terminal or first communication terminal).

The mobile terminals 30A to 30C are mobile terminals having the same configuration and each of the mobile terminals 30A to 30C can be installed in the holder 60 shown in FIG. 2. That is to say, each of the mobile terminals 30A to 30C can act as the information offer mobile terminal or a terminal requesting information (information request terminal or second communication terminal). Note that the mobile terminal 30 acting as the information request terminal does not need to be installed in the holder 60, and even when it is held by a user' s hand, a data delivery mode can be set therein by carrying out a specific manipulation with the manipulation device 48 for example.

### (Configuration of Server 10)

As shown in FIG. 1, the server 10 includes a CPU 12 constituting a part of data delivery processing means, a memory (a ROM, a RAM, or the like) constituting recording means, a wireless circuit 22 as wireless means, a display (LCD) device 23 for displaying thereon the various kinds of information, and a manipulation device 24 constituting input means.

The CPU 12 includes a control circuit 13, a data request signal reception circuit (hereinafter referred to as "a reception circuit" for short) 14, an image pickup control circuit 15, an intra-specified area terminal retrieval circuit (hereinafter referred to as "a retrieval circuit" for short) 16, a map information composition circuit 17, an intra-specified area terminal information transmission circuit (hereinafter referred to as "a transmission circuit" for short) 18, and a map information circuit 19. These circuits may be separated in the form of hardware, or may operate in accordance with software.

The control circuit (function) 13 executes a processing for storing (registering) location information (location measurement information obtained by the GPS) of the mobile terminal 30 received through the wireless circuit 22 in a mobile terminal database 26 as second memory means. The reception circuit 14 has a function of receiving a data request signal from the mobile terminal 30. The image pickup control circuit 15 has a function of carrying out the control so as to instruct the mobile terminal 30 to execute the image pickup processing. The map information circuit 19 has a function of retrieving a place name or the like specified by the mobile terminal 30 from the map data.

The retrieval circuit 16 has a function of retrieving the mobile terminal 30B or 30C as the information offer terminal within an area specified by the mobile terminal 30A as the information request terminal based on the location information of the mobile terminals 30 stored in the mobile terminal database 26.

The map information composition circuit 17 has a function of generating composite data which is obtained by composing the map information of the map database 28 as first memory means with the location information of the vehicle 58 having the mobile terminal 30B or 30C installed therein. The transmission circuit 18 has a function of transmitting the composite data generated in the map information composition circuit 17 to the mobile terminal 30A as the information request terminal.

Then, information of the current location of the mobile terminal 30B or 30c stored as the information offer terminal is registered in the mobile terminal database 26. Note that, in the mobile terminal which is not installed in the holder 60, attributeinformationrepresentingthatthisterminalisamobile terminal for which the transmission of the image data is limited is registered in the mobile terminal database 26.

Thus, the retrieval circuit 16 can retrieve the current location of the mobile terminal in a state in which the image data can be transmitted (the mobile terminal installed in the holder 60) from the mobile terminal 30B or 30C located in an area as an object of retrieval and registered in the mobile terminal database 26, for the mobile terminal 30A serving as the information request terminal.

Note that the map database 28 and the mobile terminal database 26 are connected to the server 10. Then, the data can be exchanged between the map database 28 and the mobile terminal database 26, and the server 10.

The CPU 12 manages the overall operation of the server 10, and instructs the above-mentioned circuits 13 and the like, for example to execute the various processings. That is to say, the memory 20 has a memory area for the program in accordance with which the various processings are executed, and for reading/writing of the various data. More specifically, the memory 20 includes a storage area such as a work area.

### (Operation)

An operation will hereinafter be described.

Upon installation of the mobile terminal 30 (e.g., 30B) in the holder 60, an electric power is supplied to the power supply circuit 52 of the mobile terminal 30 through the power supply plug 62. When the detection circuit 50 of the mobile terminal 30 detects that the power supply plug 62 is connected to the power supply circuit 52, the detection circuit 50 generates a detection signal to output the detection signal to the CPU 32.

When the mobile terminal 30 receives an image pickup start signal (command signal) from the image pickup control circuit 15 of the server 10 after detecting a information offer mode (corresponding to a state in which the mobile terminal 30 is installed in the holder 60), the CPU 32 instructs the camera 40 to start the image pickup processing.

The image pickup start signal is a signal in accordance with which the camera 40 of the mobile terminal 30 (30B) set in the information offer mode is instructed to start the image pickup processing when the mobile terminal 30 (30B) set in the information offer mode is located in the location specified by the mobile terminal 30 (30A) set in a information request mode. In addition, as another example, the camera 40 of the mobile terminal 30 (30B) in the information offer mode which has received the image pickup start signal may start immediately the image pickup processing.

Note that as for another method including carrying out the control, after the mobile terminal 30 (30B) is set in the information offer mode, the camera 40 of the mobile terminal 30 (30B) may immediately start the image pickup processing, and the image data obtained through the image pickup processing may be recorded in the storage unit 44.

So long as the mobile terminal 30 is installed in the holder 60 of the vehicle 58, the mobile terminal 30 can be set in the information offer mode. Hence, the setting for the dedicated image pickup device, and the troublesome setting-up work required every installation of the image pickup device become unnecessary, and thus the convenience in terms of the use is improved.

When receiving the transmission control signal from the transmission circuit 18 of the server 10, the mobile terminal 30B or 30C is set in a data transmission mode in which the image data obtained through the image pickup processing by the camera 40 can be transmitted to the mobile terminal 30A.

Note that in order to show that the image is being captured, or the image data is being transmitted, the mobile terminal 30 may instruct the display device 34 shown in FIG. 2 to display thereon the effect that "the image is being captured", or "the image data is being transmitted", or may turn ON a Light Emitting Diode (LED) disposed on an outside surface of the mobile terminal 30.

In addition, even under the control of the server 10, the mobile terminal 30 is set so that when a possessor (user) of the mobile terminal 30 uses the mobile terminal 30, the priority is given to processing selected by the user.

Moreover, when the mobile terminal 30 is not installed in the holder 60, or transmission of the image data is limited, the setting is carried out so that themobile terminal 30 concerned does not become a candidate of the information offer terminal based on the results of the retrieval for the mobile terminal database 26 by the server 10.

On the other hand, when after becoming the candidate of the information offer terminal based on the retrieval results, the mobile terminal 30 makes the transition to a state in which the transmission is limited, the update control for the transmission or the like of the data is suitably carried out by changing the state in which the transmission is limited in accordance with a response signal respondent to the control signal from the server 10.

Note that a changeover to the image pickup mode or the data transmission mode can be set in advance by the mobile terminal 30. In addition, when the bits of the image data recorded in the image memory of the storage unit 44 shown in FIG. 2 exceeds the capacity of the storage unit 44, for example, the image data may be written to the image memory of the storage unit 44 from the head thereof to be successively written over the previous image data without stopping the image pickup processing.

Moreover, when during standby, the location information transmitted from the base station 5 side is different from the location information stored in a location register (LR) of the storage unit 44, the mobile terminal 30 updates the location data.

The location measurement information in the mobile terminal 30 obtained from the GPS is registered in the mobile terminal database 26 connected to the server 10. However, in this embodiment, when the location measurement information is applied as a part of the service offered by the communication enterprise (carrier) of the mobile communication, the location information in the location register (LR) may be used together as the information used in the retrieval or the like of the mobile terminal 30.

In addition, each of the mobile terminals 30A to 30C of this embodiment can peruse as the mobile terminal possessed by a registeredmember a browser dedicated to the registered members. That is to say, each of the mobile terminals 30A to 30C has a browser function. Then, the mobile terminal 30 accesses the server 10 based on the selection from a menu screen of the display device 34 (refer to FIG. 2).

On the other hand, the mobile terminal 30B or 30C becoming the information offer terminal (the mobile terminal for transmitting the image information obtained through the image pickup processing to the mobile terminal 30A) receives a control signal from the image pickup control circuit 15 of the server 10. Upon reception of this control signal, the mobile terminal 30B or 30C is set in the image pickup mode.

### (Data Delivery Mode)

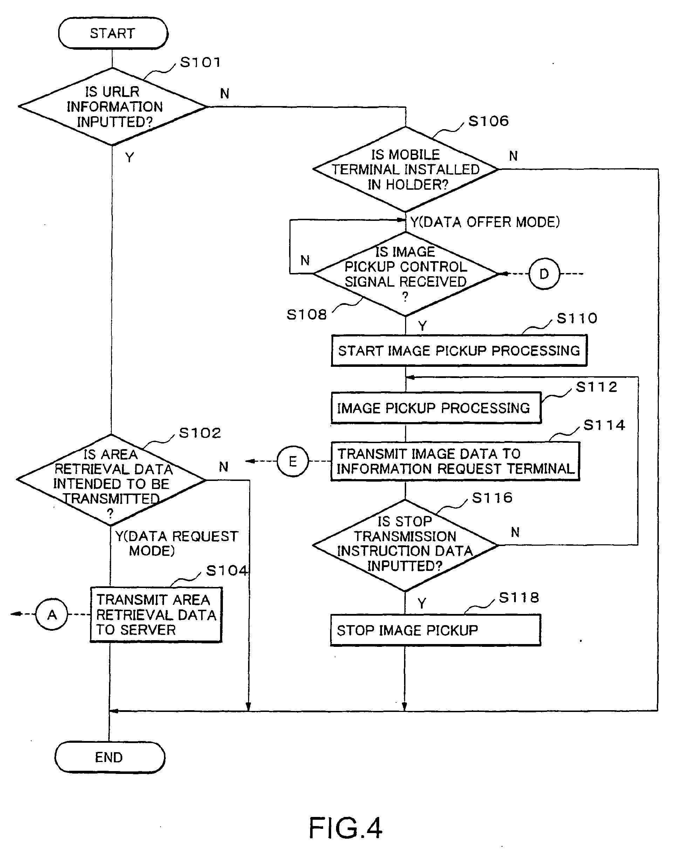

A description will hereinafter be given with respect to a processing related to a data delivery mode in which data is transmitted/receivedto/fromthemobile terminal 30 or the server 10 with reference to FIGS. 4 to 6. The data deliverymode includes a data request mode (data request terminal) in which the mobile terminal requests desired data, and a data offer mode (data offer terminal) in which the mobile terminal offers specific data to another mobile terminal.

FIG. 4 is a flow chart showing a processing routine executed by the CPU 32 of the mobile terminal 30. The program related to this processing routine is stored in the program area of the storage unit 44 (refer to FIG. 2) in advance. In addition, the flow chart shown in FIG. 4 represents the processing which is executed after a power supply switch (not shown) of the mobile terminal 30 is turned ON. Note that it is supposed in the example shown in FIGS. 4 to 6 that the information request terminal is the mobile terminal 30A, and the information offer terminal is each of the mobile terminals 30B and 30C.

As shown in FIG. 4, in Step S100, the CPU 32 shown in FIG. 2 judges whether or not Uniform Resource Locator (URLR) information is inputted. For input of the URLR information, the mobile terminal 30A accesses a site which carries the URLR information of the server 10. Note that the URLR information is transmitted to the mobile terminal 30A through the map database 28 and the map information circuit 19 of the server 10 shown in FIG. 1.

When the judgment result in Step S100 shows an affirmation, i.e., it is judged in Step S100 that the URLR information is inputted, in Step S102, it is judged whether or not the mobile terminal 30 is in tended to be set in the data request mode, i.e., it is judged whether or not the area retrieval data (data request signal) is intended to be transmitted. Whether or not the area retrieval data is intended to be transmitted is judged based on a process in which the CPU 32 detects the transmission signal when the transmission key of the manipulation key 48 shown in FIG. 2 is manipulated.

As a prerequisite of transmission of the area retrieval data, a user needs to specify a desired specified location (specified area) to input information of the desired specified location from the display device 34 on which the URLR information is being displayed by manipulating the manipulation device 48 shown in FIG. 2.

As a method including inputting the specification, for example, it is necessary to input the specified place name (the prefecture name, the municipality name, the road name and the like) , information related to how many kilometers a radius with the place having the specified place name as a center has within which the mobile terminal 30 is located, information related to how many kilometers a radius with the mobile terminal 30A, acting as the information request terminal, as a center has within which the mobile terminal 30 is located, information related to how many kilometers a radius has with which the mobile terminal 30 is located from the specified place on the map in a state in which the map is displayed on the display device 34 of the mobile terminal 30A, and so forth.

When the judgment result in Step S102 shows an affirmation, i.e., it is judged in Step S102 that the area retrieval data is intended to be transmitted (the transmission key of the manipulation device 48 is manipulated), in Step S104, the area retrieval data is transmitted to the server 10 (refer to an arrow A of FIG. 4). Note that when the judgment result in Step S102 shows a negation, i.e., it is judged in Step S102 that the area retrieval data is not intended to be transmitted, only the processing for displaying the URLR information on the display device 34 of the mobile terminal 30A is executed, and the operation of this flow chart is ended.

On the other hand, when the judgment result in Step S100 shows a negation, i.e., it is judged in Step S100 that the URLR information is not inputted (the URLR site of the server 10 shown in FIG. 1 is not accessed) , the CPU 32 judges in Step S106 whether or not the mobile terminal 30 is installed in the holder 60 shown in FIG. 2.

This judgment, as described above, is carried out based on the detection signal outputted from the detection circuit 50 shown in FIG. 2. That is to say, when the mobile terminal 30 is installed in the holder 60 and the detection signal is inputted to the CPU 32, the CPU 32 judges that the mobile terminal 30 is set in the data offer mode. Note that when the judgment result in Step S106 shows a negation, i.e., it is judged in Step S106 that the mobile terminal 30 is not set in the data offer mode, the CPU 32 ends the operation of this flow chart.

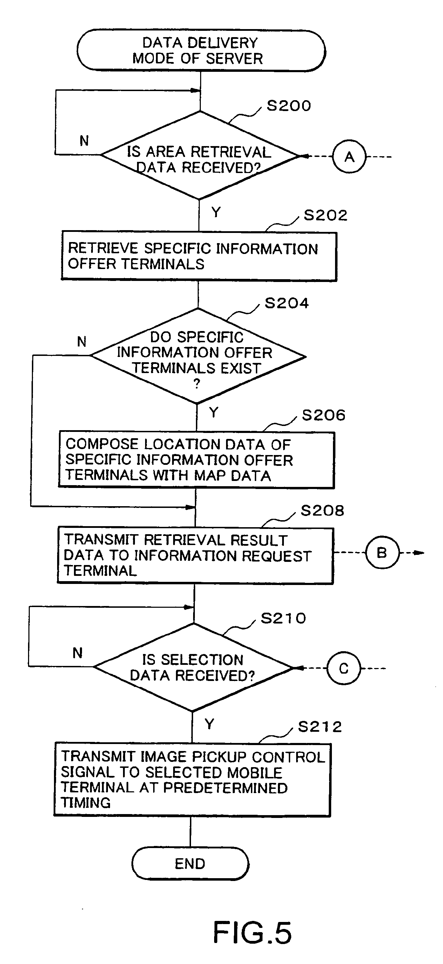

As shown in FIG. 5, in Step S200, it is judged whether or not the reception circuit 14 of the server 10 shown in FIG. 2 receives the area retrieval data (data request signal) from Step S104 of FIG. 4. When the judgment result in Step S200 shows an affirmation, i. e. , it is judged in Step S200 that the reception circuit 14 of the server 10 receives the area retrieval data (refer to an arrow A of FIG. 5), in Step S202, the retrieval circuit 16 retrieves the mobile terminals (specific information offer terminals) 30B and 30C which exist within the specified area and each of which can transmit the image data (each of which is installed in the holder 60 shown in FIG. 2).

That is to say, in the retrieval processing, the retrieval circuit 16 checks the information offer terminals 30 existing within the specified area and also checks the specific information offer terminals 30B and 30C each of which can transmit the image data while referring to the data in the mobile terminal database 26.

In Step S204, the retrieval circuit 16 judges whether or not the specific information offer terminals (30B and 30C) exist. When the judgment result in Step S204 shows an affirmation, i.e., it is judged in Step S204 that the specific information offer terminals exist, in Step S206, the map information composition circuit 17 shown in FIG. 1 composes the location data of the specific information offer terminals 30B and 30C with the map data read out from the map database 28.

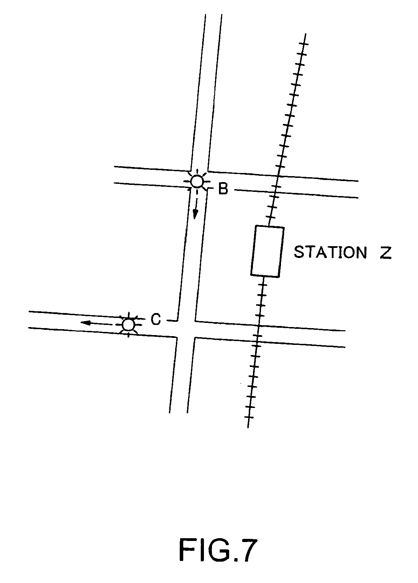

In this composition processing, a predetermined mark data processing (such as a flash processing) (refer to FIG. 7) is applied to a place on the map data (image data) corresponding to the above-mentioned location data. In addition, an arrow indicating a traveling direction of the vehicle 58 (refer to FIG. 7) is also displayed together with the predetermined mark data. That is to say, the server 10 shown in FIG. 1 estimates the traveling direction of the vehicle 58 by referring to the past location data read out from the mobile terminal database 26 to execute the processing for displaying the arrow indicating the traveling direction of the vehicle 58.

In Step S208, the transmission circuit 18 shown in FIG. 2 transmits the retrieval result data to the information request terminal 30A. That is to say, when the judgment result in Step S204 shows an affirmation, i.e., it is judged in Step S204 that the specific information offer terminals exist, the transmission circuit 18 transmits the composite data obtained through the composition processing in Step S206 to the information request terminal 30A.

On the other hand, when the judgment result in Step S204 shows a negation, i. e. , it is judged in Step S204 that no specific informationofferterminalexists, inStepS208, the transmission circuit 18 transmits the data representing that "no specific information offer terminal exists" stored in the memory 20 in advance to the information request terminal 30A (refer to an arrow B of FIG. 5).

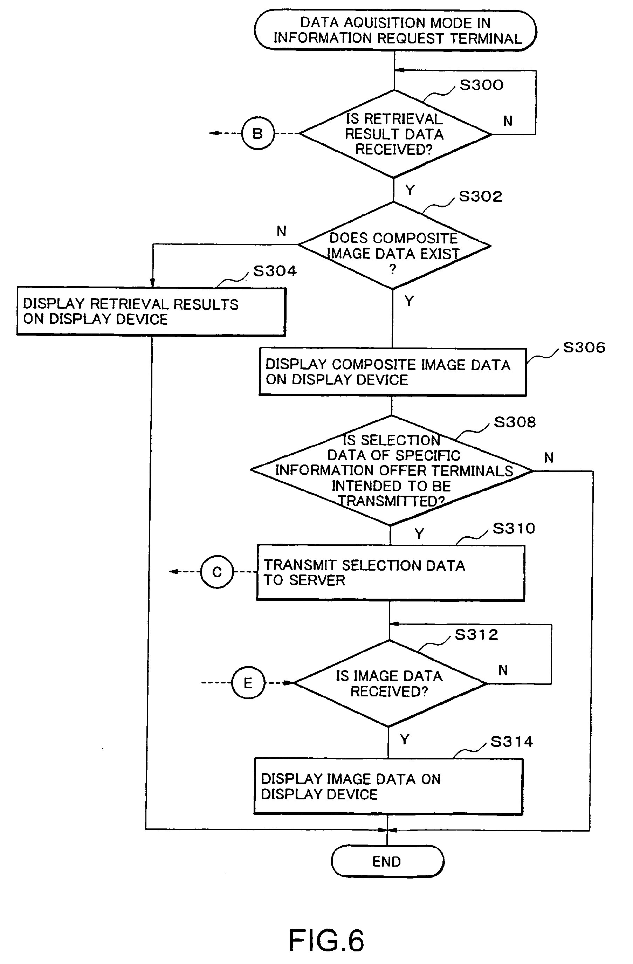

As shown in FIG. 6, in Step S300, the CPU 32 shown in FIG. 2 judges whether or not the retrieval result data is received. When the judgment result in Step S300 shows an affirmation, i.e., it is judged in Step S300 that the retrieval result data is received (refer to an arrow B of FIG. 6), the CPU 32 judges in Step S302 whether or not the retrieval result data is composite image data (data when the specific information offer terminals exist).

When the judgment result in Step S302 shows a negation, i.e., it is judged in Step S302 that the retrieval result data is not composite image data, in Step S304, the retrieval results, i.e., the data representing that "no specific information offer terminal exists" is displayed on the display device 34 shown in FIG. 2 for a predetermined period of time. After completion of the processing in Step S304, the CPU 32 shown in FIG. 2 ends the operation of this flow chart. Note that the processing in Step S300 waits until the retrieval result data is inputted.

When the judgment result in Step S302 shows an affirmation, i.e., it is judged in Step S302 that the retrieval result data is the composite image data, in Step S306, the CPU 32 instructs the display device 34 to display thereon the composite image as shown in FIG. 7. That is to say, the CPU 32 instructs the display device 34 to flash the image of the locations of the specific information offer terminals 30B and 30C retrieved on the map data in the form of predetermined mark data, e.g., circle mark data in corresponding places on the map data, and to display data "B" or "C" as an identifier together therewith in the vicinity of the circle mark data.

Note that as a method including displaying the image on the display device 34, the location of the information offer terminal 30B or 30C may be displayed in the form of the place name data (character information) instead of being marked (instead of addition of the mark data).

For example, the server 10 may compare the location data of the current location of the information offer terminal 30B or 30C with the map data stored in the map database 15 to transmit the location data in the form of the character data such as "vicinity of I.C.xx of freeway oo" to the information request terminal 30A. That is to say, the above-mentioned character data may be displayed on the display device 34 of the mobile terminal 30. Moreover, the above-mentioned character data may be outputted in the form of voice guidance (audio data).

In Step S308, the CPU 32 judges whether or not the selection data for the specific information offer terminal 30B or 30C is intended to be transmitted. This judgment is carried out based on the detection, by the CPU 32, of the transmission signal when the transmission key of the manipulation device 48 shown in FIG. 2 is manipulated.

As a prerequisite of transmission of the selection data, a user possessing the information request terminal 30A selects the specific information offer terminal 30B or 30C located in the place nearest the specified location for example (the location for which the image data is exceedingly wanted to be obtained) from the identifier "B" or "C" (refer to FIG. 7) of the image data displayed on the display screen of the display device 34.

As this selection processing, a suitable one of the identifiers displayed on the display screen of the display device 34 may be positioned and selected with a cursor (through a manipulation such as a double click manipulation), or a symbol (such as characters or numeric characters) of the specific information offer terminal may be selected (through a manipulation such as key input).

Here, it is supposed that the user of the information request terminal 30A has selected the specific information offer terminal 30B. Note that, when a plurality of image data are wanted to be obtained, the order of priority are assigned to the plurality of image data so that a plurality of identifiers can be selected.

When the judgment result in Step S308 shows an affirmation, i. e. , it is judged in Step S308 that the selection data is intended to be transmitted, in Step S310, the CPU 32 transmits the selection data to the server 10 (refer to an arrow C of FIG. 6). On the other hand, the judgment result in Step S308 shows a negation, i . e . , it is judged in Step S308 that no selection data is intended to be transmitted, after a lapse of predetermined period of time, the operation of this flow chart is ended.

Referring back to FIG. 5, in Step S210, it is judged whether or not the reception circuit 14 shown in FIG. 1 receives the selection data from the information request terminal 30A. When the judgment result in Step S210 shows an affirmation, i.e., it is judged in Step S210 that the reception circuit 14 receives the selection data from the information request terminal 30A, in Step S212, the image pickup control circuit 15 transmits the image pickup control signal (a signal used to request the selected specific information offer terminal to transmit the image data) generated in the image pickup control circuit 15 to the selected specific information offer terminal 30B (refer to an arrow D of FIG. 5).

When it is judged (at a predetermined timing) that the information offer terminal 30B is located in a location specified by the information request terminal 30A, the server 10 transmits the image pickup control signal. The judgment for a timing at which the image pickup control signal is transmitted is carried out based on the location data transmitted from the information offer terminal 30B. Address information of the information request terminal 30A is contained in the image pickup control signal.

Referring back to FIG. 4, in Step S108, it is judged whether or not the CPU 32 (refer to FIG. 1) of the selected specific information offer terminal 30B receives the image pickup control signal. When the judgment result in Step S108 shows an affirmation, i.e., it is judged in Step S108 that the CPU 32 of the selected specific information offer terminal 30B receives the image pickup control signal (refer to an arrow D of FIG. 4), in Step S110, the CPU 32 instructs the camera 40 (refer to FIG. 2) to start the image pickup processing.

In Step S112, the CPU 32 executes an image pickup processing for generating the image data obtained through the image pickup processing in the image circuit 41 shown in FIG. 2. In Step S114, the CPU 32 transmits the image data generated in the image circuit 41 to the information request terminal 30A shown in FIG. 1 (refer to an arrow E of FIG. 4). This transmission is carried out after the CPU 32 reads the address information contained in the image pickup control signal to call the information request terminal 30A, thereby establishing the connection.

In Step S116, it is judged whether or not the instruction data to stop the transmission is inputted. When the judgment result in Step S116 shows an affirmation, i.e., it is judged in Step S116 that the instruction data to stop the transmission is inputted, in Step S118, the CPU 32 stops the image pickup processing. That is to say, when the judgment result in Step S116 shows a negation, i.e., while no stop data is inputted in Step S116, the image pickup processing in Step S112 and the processing for transmitting the image data in Step S114 are continuously executed.

Note that as a method including stopping the transmission of the image data, for example, the transmission of the image data may be stopped in accordance with the instruction data issued from the information request terminal 30A. In addition, as another stop method, the transmission of the image data from the specific information offer terminal 30B may be automatically stopped after a lapse of a predetermined period of time.

Referring back to FIG. 6, in Step S312, it is judged whether or not the CPU 32 of the information request terminal 30A receives the image data from the specific information offer terminal 30B through the base station 5B, the communication network 7, and the base station 5C shown in FIG. 1 (refer to an arrow E of FIG. 6) . When the judgment result in Step S312 shows an affirmation, i.e. , it is judged in Step S312 that the CPU 32 of the information request terminal 30A receives the image data from the specific information offer terminal 30B, in Step S314, the CPU 32 of the information request terminal 30A instructs the display device 34 shown in FIG. 2 to display thereon the image data.

Since the image data (moving image data) obtained through the image pickup processing in the specific information offer terminal 30B is delivered (through the packet communication) in real time to the information request terminal 30A, the image data is displayed in real time on the display device 34 of the information request terminal 30A. That is to say, since the image data displayed on the display device 34 of the information request terminal 30A can be visually recognized, a traffic situation, the weather, a road surface state, and the like at a desired point can be recognized based on the visual sensation.

For this reason, since a user possessing the information request terminal can peruse the image data transmitted from the specific information offer terminal, he/she can grasp a congestion situation of a road, and the like, and hence can make such information useful for a route selection for the destination.

Note that in the processing for transmitting/receiving the image data, the image data transmitted from the specific information offer terminal 30B may be stream-transferred to the information request terminal 30A through the server 10 shown in FIG. 1. In this case, the image data may be delivered to a plurality of mobile terminals 30 through the multicast or broad cast process for example.

In addition, the image data obtained through the image pickup processing in the specific information offer terminal 30 may be transmitted via an e-mail to the information request terminal 30 (user) in which the image data is not necessarily displayed in real time on the display device 34. Moreover, the setting may be made possible by an option so that the still image data is delivered to the information request terminal 30 (user) desiring the still image data.

Furthermore, the mobile terminal 30 shown in FIG. 1 may be set in the information offer mode in a state in where a user carries the mobile terminal 30 (e.g., in a state in which the mobile terminal 30 is accommodated in a pocket of a jacket or a bag) in addition to the installation of the mobile terminal 30 in the holder 60 of the vehicle 58.

In this case, the manipulation key of the manipulation device 48 (referto FIG. 2) of the mobile terminal 30 ismanipulated, thereby setting the mobile terminal 30 in the information offer mode. Also, the audio data inputted through the microphone 46 shown in FIG. 2 is transmitted to the mobile terminal 30 set in the information request mode.

In this example, the user of the mobile terminal 30 set in the information request mode can output a voice (audio data) inputted through the microphone 46 (refer to FIG. 2) of the specific information offer terminal 30 which is arbitrarily selected by the user through the speaker 47 (refer to FIG. 2) of the mobile terminal 30 set in the information request mode. Hence, a progress situation of a parade or the like can be verified by the auditory sense.

When grasping a congestion situation, a road surface situation and the like in a desired location (area) , the information request terminal can arbitrarily select the specific information offer terminal. Thus, it is possible to grasp a time when desired image data is obtained.

Note that, a user (subscriber) of the specific information offer terminal who cooperated with the transmission of the image data may receive the various discounts by utilizing a method including adding a point.

Inthiscase, sincetheregistration (cooperation) interms of the specific information offer terminal becomes easy to be obtained, it is possible to enhance the existence degree of the specific information offer terminal in the specified location the data of which is inputted with the information request terminal.

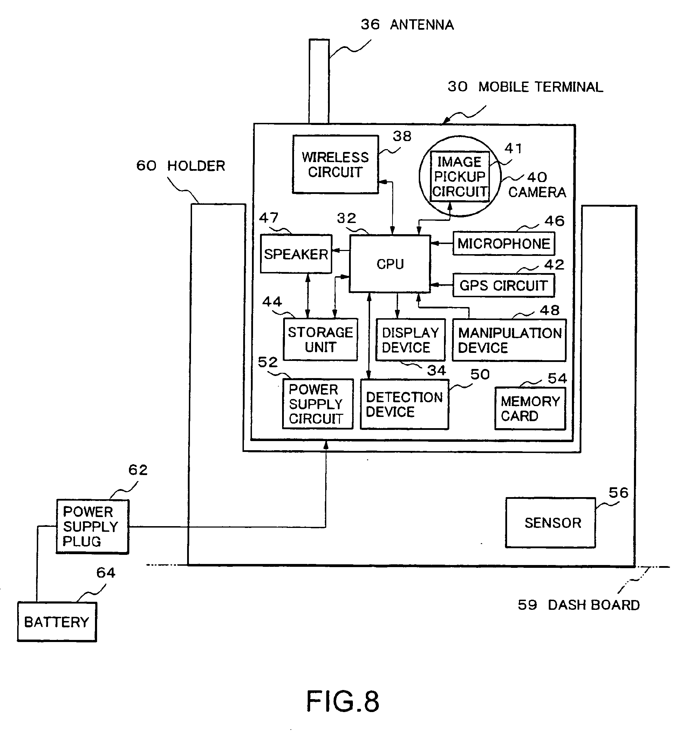

An embodiment of the present invention is shown in FIG. 8. This embodiment is an example in which when the vehicle has a collision with another one, the image data is recorded in a memory card which is adapted to be detachably mounted to the main body 31 of the mobile terminal 30. FIG. 8 is a schematic view showing amobile terminal 30 and a holder 60 of this embodiment . Note that constituent elements of the mobile terminal 30 and the holder 60 of this embodiment corresponding to those shown in FIGS. 2 and 3 are designated with the same reference numerals, and their detailed descriptions are omitted.

As shown in FIG. 8, a memory card 54 which is detachably mounted, in addition to the storage unit 44, is disposed in the mobile terminal 30. On the other hand, a sensor 56 including a collision sound recognition system is provided in the holder 60. The collision sound recognition system is well known in technique, and thus includes a recording circuit having an identification algorithm stored therein, and a sound source identification circuit for comparing audio (collision sound) data inputted from the outside with the identification algorithm.

The audio (collision sound) data to be inputted from the outside is inputted to the sensor 56 through the microphone 46 of the mobile terminal 30. When the collision sound recognition system of the sensor 56 recognizes the audio data inputted from the outside as "the collision sound", the sensor 56 generates a detection signal, and also outputs the resultant detection signal to the CPU 32 of the mobile terminal 30.

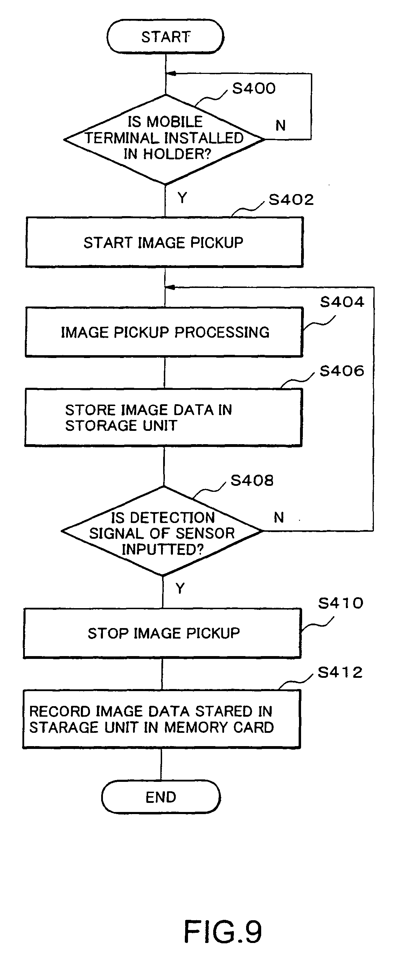

Now, a description will be given to a processing related to a data recording mode of the mobile terminal 30 with reference to FIG. 9. FIG. 9 is a flow chart showing a processing routine executed by the CPU 32 of the mobile terminal 30. A program related to this processing routine is stored in a program area of the storage unit 44 (refer to FIG. 8) in advance. In addition, the operation of the flow chart shown in FIG. 4 is an operation which is carried out after the power supply switch (not shown) of the mobile terminal 30 is turned ON.

As shown in FIG. 9, in Step S400, the CPU 32 shown in FIG. 8 judges whether or not the mobile terminal 30 is installed in the holder 60. This judgment is carried out based on a process in which the detection circuit 50 detects (outputs a detection signal) that a voltage of an on-vehicle battery (not shown) is applied to the power supply circuit 52 of the mobile terminal 30 through the power supply voltage 62. Note that the processing in Step S400 is continuously executed until the mobile terminal 30 is installed in the holder 60.

When the judgment results in Step S400 show an affirmation, i.e., it is judged in Step S400 that the mobile terminal 30 is installed in the holder 60, in Step S402, the CPU 32 instructs the camera 40 to start the image pickup. In Step S404, the CPU 32 executes the image pickup processing for generating the image data obtained through the image pickup processing in the image circuit 41 shown in FIG. 8. In Step S406, the CPU 32 instructs the storage unit 44 to store therein the image data generated in the image circuit 41.

Note that when the bits of the image data recorded in the image memory of the storage unit 44 shown in FIG. 8 exceeds the capacity of the storage unit 44, the image data is written to the image memory of the storage unit 44 from the head thereof without stop for example to be successively written over the previous image data.

In Step S408, the CPU 32 judges whether or not the detection signal of the sensor 56 shown in FIG. 8 is inputted. When the judgment results in Step S408 show an affirmation, i.e., it is judged in Step S408 that the detection signal of the sensor 56 shown in FIG. 8 is inputted, in Step S410, the CPU 32 stops the image pickup after a lapse of a predetermined period of time (a period of time set in advance).

On the other hand, when the judgment results in Step S408 show a negation, i.e., while no detection signal of the sensor 56 shown in FIG. 8 is inputted, the image pickup processing in Step S404, and the processing for storing the image data in Step S406 are continuously executed. In Step S412, the image data stored in the storage unit 44 shown in FIG. 8 is recorded in the memory card 54 such as a flash memory.

In this embodiment, upon installation of the mobile terminal 30 in the holder 60 of the vehicle 58, the mobile terminal 30 is set in the data offer mode. Then, in this embodiment, in the data offer mode, the image data in occurrence of an accident such as a car accident with which a driver meets in traveling can be recorded in the memory card 54. Here, such image data can be made useful for an investigation of an accident situation or the like, and an analysis of the cause of the accident.

Note that the above-mentioned sensor 56 may also be built in the mobile terminal 30. In addition, an acceleration sensor adopted in an air bag or a retractor may be used as the above-mentioned sensor 56. When the acceleration sensor detects an acceleration (a shock given to the vehicle) equal to or higher than a predetermined level, the detection signal may be outputted to the CPU 32.

Note that since other constitutions, and operations and effects of this embodiment are the same as those described above (Figs. 1 to 7), their detailed descriptions are omitted.

A pattern of a combination in the present invention, for example, may be a pattern of a combination of two examples or two or more examples of the above-mentioned embodiments and changes thereof.

The server of this embodiment, as shown in FIG. 1, is an apparatus including the wireless circuit 22 becoming the transmission means or the reception means, the map database 28 becoming the first storage means, the control circuit 13 becoming the location data acquisition means, the mobile terminal database 26 becoming the second storage means, the retrieval circuit 16 becoming the retrieval means, and the image pickup control circuit 15 becoming the instruction data generation means.

The data delivery apparatus of this embodiment, as shown in FIG. 2, is an apparatus including the camera 40, the microphone 46 or the like becoming the data acquisition means, the wireless circuit 38 becoming the transmission means, and the control circuit 13 becoming the control means.

The data delivery system of this embodiment includes, as shown in FIG. 2, the camera 40, the microphone 46 or the like becoming the data acquisition means constituting the first communication device, the wireless circuit 38 becoming the transmission means, the control circuit 13 becoming the control means, the wireless circuit 38 becoming the transmission means or the reception means constituting the second communication device, and the manipulation device 4 8 becoming the specification means or the selection means, and also includes, as shown in FIG. 1, the wireless circuit 22 becoming the transmission means or the reception means constituting the server, the map database 28 becoming the first storage means, the control circuit 13 becoming the location acquisition means, the mobile terminal database 26 becoming the second storage means, the retrieval circuit 16 becoming the retrieval means, and the image pickup control circuit 15 becoming the instruction data generation means.

The communication device of this embodiment, as shown in FIG. 2, is a device including the wireless circuit 38 becoming the transmission means or the reception means, and the manipulation device 48 becoming the specification means or the selection means. The electronic apparatus of this embodiment includes the manipulation device 48 becoming the specification means or the selection means constituting the information request means, the wireless circuit 38 becoming the first or second reception means, the camera 40 or the microphone 46 becoming the data acquisition means constituting the information offer means, the wireless circuit 38 becoming the transmission means, and the control circuit 13 becoming the control means.

Note that in this embodiment, there is adopted a configuration in which the above-mentioned delivery apparatus or the above-mentioned communication device is incorporated in the electronic apparatus such as the mobile terminal 30, a personal computer or a Personal Digital Assistants (PDA).

The electronic apparatus according to the present invention has a concept including a mobile terminal, a personal computer, a PDA and the like. Thus, for example, the electronic apparatus according to the present invention may be a mobile telephone having an image pickup function, an audio input function, an Internet connection function, a browser function, a GPS reception function and the like, a PDA, a car navigation terminal or the like.

## Claims

1. A data delivery apparatus, comprising:
data acquisition means for acquiring data from at least one of image pickup means (40, 41) for capturing an image of a subject in a desired specification location and audio input means (46) for inputting audio input;
transmission means for transmitting the data in the specification location acquired by the data acquisition means to at least one of a server (10) and other communication devices (30A, 30C) through a mobile communication network (7); and
control means for, when receiving transmission instruction data from the server (10) to instruct the transmission means to transmit the data acquired in the specification location, setting a destination, to which the data acquired in the specification location is to be transmitted, among the other communication devices (30A, 30C) based on the transmission instruction data;
installation means for installing a main body of the data delivery apparatus in a vehicle, the installation means including installation detection means (50) for detecting installation of the main body of the data delivery apparatus;
accident detection means (56) in at least one of the installation means and the main body of the data delivery apparatus for detecting an accident associated with the vehicle; and
recording means (54) for recording therein image data acquired by the data acquisition means, the recording means (54) being detachably mounted to the main body of the data delivery apparatus, wherein, when the data acquisition means is disposed so as to be directed to a front direction of the vehicle and the accident detection means (54) detects data associated with the accident, the recording means records therein the image data;
wherein, when the installation detection means (50) detects that the main body of the data delivery apparatus is installed in the installation means, the data acquisition means is set in a data offer mode offering the data acquired in the specification location or in a data request mode of requesting data acquired by one of the other communication data (30A, 30B) in another specification location.

2. The data delivery apparatus according to claim 1, wherein the accident detection means (56) includes a collision sound recognition system for inputting audio data from the audio input means (46).

3. The data delivery apparatus according to claim 2, wherein the accident detection means (56) generates an accident detection signal when the collision sound recognition system recognizes audio data inputted from the audio input means (46) as collision sound.

4. The data delivery apparatus according to claim 1, wherein the installation means includes electric power supply means (52) for supplying an electric power to the main body of the data delivery apparatus.

5. A data delivery system for transmitting/receiving data through a mobile communication network (7), comprising:
the data delivery apparatus (30B) according to one of the claims 1 to 4;
a communication device (30A) including specification means for specifying the desired specification location based on data related to a map, reception means connected to the mobile communication network (7) for receiving location data of the data delivery apparatus (30B) located in the specification location specified by the specification means and transmission means connected to the mobile communication network (7) for transmitting instruction data generated by the specification means; and
a server (10) including retrieval means for retrieving the data delivery apparatus (30B) located in the specification location specified by the specification means of the communication device (30A), location data generation means for generating location data of the data delivery apparatus (30B) retrieved by the retrieval means and transmission means connected to the mobile communication network (7) for transmitting the location data generated by the location data generation means to the communication device (30A).

6. The data delivery system according to claim 5, comprising
at least one data delivery apparatus (30B, 30C) according to one of the claims 1 to 4; wherein
the communication device (30A) further includes selection means for selecting the one or two or more of the at least one data delivery apparatus (30B, 30C) among the at least one data delivery apparatus (30B, 30C) each located in the specification location and reception means connected to the mobile communication network (7) for receiving data in the specification location acquired by the data acquisition means of each of the at least one data delivery apparatus (30B, 30C) selected by the selection means;
the server (10) further includes instruction data generation means for generating the instruction data to instruct the at least one data delivery apparatus (30B, 30C) selected by the selection means of the communication device (30A) to offer data in the specification location; and
the transmission means of the server (10) transmits the instruction data generated in the instruction data generation means to the at least one selected data delivery apparatus (30B, 30C).

7. The data delivery system according to claim 5 or 6, wherein the server (10) further comprises:
reception means for receiving data, to which the at least one data delivery apparatus (30B, 30C) and the communication device (30A) are connected through the mobile communication network (7);
first storage means for storing therein data related to map data;
location data acquisition means for acquiring data of locations where the at least one data delivery apparatus (30B, 30C) and the communication device (30A) are located; and
second storage means for storing therein the location data acquired by the location data acquisition means so as for the location data to be set in correspondence to the at least one data delivery apparatus (30B, 30C) and the communication device (30A).

8. A data delivery method, comprising:
installing a data delivery apparatus in a vehicle;
acquiring data by capturing, in a front direction of the vehicle, an image of a subject in a desired specification location and inputting audio input;
transmitting the acquired data to at least one of a server and other communication devices through a mobile communication network;
setting, when receiving transmission instruction data from the server to transmit the acquired data, a destination to which the data acquired in the specification location is to be transmitted, among the other communication devices based on the transmission instruction data;
detecting whether an accident associated with the vehicle occurs; and
recording, in response to an detection of accident associated with the vehicle, acquired image data in a detachably mounted recording means;
and further comprising
detecting installation of the data delivery apparatus in the vehicle; and
setting, when installation of the data delivery apparatus in the vehicle is detected, a data offer mode of offering the data acquired in the specification location or in a data request mode or acquired by one of the other communication devices in another specification location.

9. The data delivery method according to claim 8, wherein the accident detecting is performed on the basis of acquired audio input.

10. The data delivery method according to claim 9, wherein an accident detection signal is generated when audio input is recognized as collision sound.

11. The data delivery method according to one of the claims 8 to 10,
comprising, by means of a communication device, specifying the desired specification location based on data related to a map, receiving via the mobile communication network location data of the data delivery apparatus located in the specified specification location and transmitting via the mobile communication network the instruction data; and
comprising, by means of a server, retrieving the data delivery apparatus located in the specification location specified by the communication device, generating location data of the data delivery apparatus as retrieved and transmitting via the mobile communication network the generated location data to the communication device.

12. The data delivery method according to claim 11, further comprising:
using at least one data delivery apparatus according to one of the claims 1 to 4;
selecting by the communication device one or two or more of the at least one data delivery apparatus among the at least one data delivery apparatus each located in the specification location and receiving by the communication device via the mobile communication network data in the specification location acquired by the at least one selected data delivery apparatus; and
generating by the server the instruction data to instruct the at least one selected data delivery apparatus to offer data in the specification location and transmitting by the server the instruction data to the at least one selected data delivery apparatus.

13. The data delivery method according to claim 11 or 12, further comprising, by means of the server:
receiving data from the at least one data delivery apparatus and the communication device via the mobile communication network;
storing data related to map data;
acquiring data of locations where at least one data delivery apparatus and the communication device are located; and
storing the acquired location data so as for the location data to be set in correspondence to the at least one data delivery apparatus and the communication device.

## Patentansprüche

1. Datenbereitstellungsvorrichtung, mit:
einer Datenakquisitionseinrichtung, zum Akquirieren von Daten von wenigstens einer Bildaufnahmeeinrichtung (40, 41) zum Erfassen eines Bildes eines Gegenstands an einer gewünschten Spezifikationsstelle und einer Audioeingabeeinrichtung (46) zum Eingeben einer Audioeingabe;
einer Übertragungseinrichtung zum Übertragen der von der Datenakquisitionseinrichtung an der Spezifikationsstelle akquirierten Daten zu wenigstens einem von einem Server (10) und weiteren Kommunikationsvorrichtungen (30A, 30C) über ein Mobilkommunikationsnetzwerk (7); und
einer Steuereinrichtung, um, wenn Übertragungsbefehlsdaten von dem Server (10) empfangen werden, die Übertragungseinrichtung anzuweisen, die an der Spezifikationsstelle akquirierten Daten zu übertragen, auf der Grundlage der Übertragungsanweisungsdaten unter den weiteren Kommunikationsvorrichtungen (30A, 30C) ein Ziel fest zu legen, zu dem die an der Spezifikationsstelle akquirierten Daten zu übertragen sind;
einer Installationseinrichtung zum Installieren eines Hauptkörpers der Datenbereitstellungsvorrichtung in einem Fahrzeug, wobei die Installationseinrichtung eine Installationsdetektionseinrichtung (50) aufweist, um eine Installation des Hauptkörpers der Datenbereitstellungsvorrichtung zu detektieren;
einer Unfalldetektionseinrichtung (56) in wenigstens einer der Installationseinrichtungen und des Hauptkörpers der Datenbereitstellungsvorrichtung zum Detektieren eines mit dem Fahrzeug zusammenhängenden Unfalls; und
einer Aufzeichnungseinrichtung (54), um darin von der Datenakquisitionseinrichtung akquirierte Bilddaten zu speichern, wobei die Aufzeichnungseinrichtung (54) entfernbar an dem Hauptkörper der Datenbereitstellungsvorrichtung befestigt ist, wobei, wenn die Datenakquisitionseinrichtung angeordnet ist, damit sie in eine nach vorne gerichtete Richtung des Fahrzeugs gerichtet ist, und die Unfalldetektionseinrichtung (54) dem Unfall zugeordnete Daten detektiert, die Aufzeichungseinrichtung darin die Bilddaten aufzeichnet;
wobei, wenn die Instatllationsdetektionseinrichtung (50) detektiert, dass der Hauptkörper der Datenbereitstellungsvorrichtung in der Installationseinrichtung installiert ist, die Datenakquisitionseinrichtung in eine Betriebsart zum Anbieten von Daten, die die an der Spezifikationsstelle akquirierten Daten anbietet, oder in eine Betriebsart zum Abrufen von Daten zum Abrufen von Daten gebracht wird, die von einer der weiteren Kommunikationsvorrichtungen (30A, 30B) an einer anderen Spezifikationsstelle akquiriert wurden.

2. Datenbereitstellungsvorrichtung nach Anspruch 1, bei der die Unfalldetektionseinrichtung (56) ein Kollisionsschallerkennungsystem aufweist, um Audiodaten von der Audioeingabeeinrichtung (46) einzugeben.

3. Datenbereitstellungsvorrichtung nach Anspruch 2, bei der die Unfalldetektionseinrichtung (56) ein Unfalldetektionssignal erzeugt, wenn das Kollisionsschallerkennungssystem von der Audioeingabeeinrichtung (46) eingegebene Audiodaten als Kollisionsschall erkennt.

4. Datenbereitstellungsvorrichtung nach Anspruch 1, bei der die Installationseinrichtung eine elektrische Leistungsversorgungseinrichtung (52) aufweist, um dem Hauptkörper der Datenbereitstellungsvorrichtung elektrische Leistung zuzuführen.

5. Datenbereitstellungssystem zum Senden/Empfangen von Daten über ein Mobilkommunikationsnetzwerk (7), mit:
der Datenbereitstellungsvorrichtung (30B) gemäß einem der Ansprüche 1 bis 4;
einer Kommunikationsvorrichtung (30A), die eine Spezifikationseinrichtung zum Spezifizieren der gewünschten Spezifikationsstelle auf der Grundlage von eine Landkarte betreffenden Daten, eine Empfangseinrichtung, die mit dem Mobilkommunikationsnetzwerk (7) verbunden ist, um Lagedaten der Datenbereitstellungsvorrichtung (30B) zu empfangen, die an der von der Spezifikationseinrichtung spezifizierten Spezifikationsstelle angeordnet ist, und eine Übertragungseinrichtung aufweist, die mit dem Mobilkommunikationsnetzwerk (7) verbunden ist, um von der Spezifikationseinrichtung erzeugte Befehlsdaten zu übertragen; und
einem Server (10), der eine Abfrageeinrichtung zum Abfragen der Datenbereitstellungsvorrichtung (30B), die an der von der Spezifikationseinrichtung der Kommunikationsvorrichtung (30A) spezifizierten Spezifikationsstelle angeordnet ist, eine Lagedatenerzeugungseinrichtung, um Lagedaten der von der Abfrageeinrichtung abgefragten Datenbereitstellungsvorrichtung (30B) zu erzeugen, und eine Übertragungseinrichtung aufweist, die mit dem Mobilkommunikationsnetzwerk (7) verbunden ist, um die von der Lagedatenerzeugungseinrichtung erzeugten Lagedaten zu der Kommunikationsvorrichtung (30A) zu übertragen.

6. Datenbereitstellungssystem nach Anspruch 5, mit
wenigstens einer Datenbereitstellungsvorrichtung (30B), 30C) gemäß einem der Ansprüche 1 bis 4; wobei
die Kommunikationsvorrichtung (30A) ferner eine Auswahleinrichtung, um die eine oder zwei oder mehr der wenigstens einen Datenbereitstellungsvorrichtung (30B, 30C) unter der wenigstens einen Datenbereitstellungsvorrichtung (30B, 30C) zu wählen, die jeweils an der Spezifikationsstelle angeordnet sind, und eine Empfangseinrichtung aufweist, die mit dem Mobikommunikationsnetzwerk (7) verbunden ist, um an der Spezifikationsstelle von der Datenakquisitionseinrichtung von jeder der wenigstens einen Datenbereitstellungsvorrichtung (30B, 30C), die von der Auswahleinrichtung ausgewählt ist, akquirierte Daten zu empfangen;
der Server (10) ferner eine Befehlsdatenerzeugungseinrichtung aufweist, um die Befehlsdaten zu erzeugen, um die wenigstens eine von der Auswahleinrichtung der Kommunikationsvorrichtung (30A) gewählte Datenbereitstellungsvorrichtung (30B, 30C) anzuweisen, Daten an der Spezifikationsstelle anzubieten; und
die Übertragungseinrichtung des Server (10) die in der Befehlsdatenerzeugungseinrichtung erzeugten Befehlsdaten zu der wenigstens einen gewählten Datenbereitstellungsvorrichtung (30B, 30C) überträgt.

7. Datenbereitstellungssystem nach Anspruch 5 oder 6, bei dem der Server (10) ferner umfasst:
eine Empfangseinrichtung zum Empfangen von Daten, mit der die wenigstens eine Datenbereitstellungsvorrichtung (30B, 30C) und die Kommunikationsvorrichtung (30A) über das Mobilkommunikationsnetzwerk (7) verbunden sind;
eine erste Speichereinrichtung, um darin Landkartendaten betreffende Daten zu speichern;
eine Lagedatenakquisitionseinrichtung, um Daten von Stellen zu akquirieren, wo die wenigstens eine Datenbereitstellungsvorrichtung (30B, 30C) und die Kommunikationsvorrichtung (30A) angeordnet sind; und
eine zweite Speichereinrichtung, um darin die von der Lagedatenakquisitionseinrichtung akquirierten Lagedaten zu speichern, um die Lagedaten in Korrespondenz mit der wenigstens einen Datenbereitstellungsvorrichtung (30B, 30C) und der Kommunikationsvorrichtung (30A) zu bringen.

8. Datenbereitstellungsverfahren, umfassend:
Installieren einer Datenbereitstellungsvorrichtung in einem Fahrzeug;
Akquirieren von Daten, in dem in einer nach vorne gerichteten Richtung des Fahrzeugs ein Bild eines Gegenstands an einer gewünschten Spezifikationsstelle erfasst und Audioeingabe eingegeben wird;
Übertragen der akquirierten Daten zu wenigstens einem eines Server und weiterer Kommunikationsvorrichtungen über ein Mobilkommunikationsnetzwerk;
Festlegen, wenn Übertragungsbefehlsdaten von dem Server empfangen werden, um die akquirierten Daten zu übertragen, eines Ziels, zu dem die an der Spezifikationsstelle akquirierten Daten zu übertragen sind, von den weiteren Kommunikationsvorrichtungen auf der Grundlage der Übertragungsbefehlsdaten;
Detektieren, ob ein mit dem Fahrzeug zusammenhängender Unfall stattfindet; und
Aufzeichnen, in Antwort auf eine Detektion eines mit dem Fahrzeug zusammenhängenden Unfalls, von akquirierten Bilddaten in einer lösbar befestigten Aufzeichnungseinrichtung; und
ferner umfassend
Detektieren einer Installation der Datenbereitstellungsvorrichtung in dem Fahrzeug; und
Einstellen, wenn die Installation der Datenbereitstellungsvorrichtung in dem Fahrzeug detektiert wird, einer Betriebsart zum Anbieten der an der Spezifikationsstelle oder in einer Datenanforderungsbetriebsart akquirierten oder von einer der weiteren Kommunikationsvorrichtungen an einer anderen Spezifikationsstelle akquirierten Daten.

9. Datenbereitstellungsverfahren nach Anspruch 8, bei dem das Detektieren eines Unfalls auf der Grundlage einer akquirierten Audioeingabe durchgeführt wird.

10. Datenbereitstellungsverfahren nach Anspruch 9, bei dem ein Unfalldetektionssignal erzeugt wird, wenn eine Audioeingabe als Kollisionsschall erkannt wird.

11. Datenbereitstellungsverfahren nach einem der Ansprüche 8 bis 10,
umfassend, mittels einer Kommunikationsvorrichtung die gewünschte Spezifikationsstelle auf der Grundlage von mit einer Landkarte betreffenden Daten zu spezifizieren, Lagedaten der an der spezifizierten Spezifikationsstelle angeordneten Datenbereitstellungsvorrichtung über das Mobilkommunikationsnetzwerk zu empfangen und die Befehlsdaten über das Mobilkommunkationsnetzwerk zu übertragen; und
umfassend, mittels eines Server die Datenbereitstellungsvorrichtung, die an der von der Kommunikationsvorrichtung spezifizierten Spezifikationsstelle angeordnet ist, abzufragen, Lagedaten der abgefragten Datenbereitstellungsvorrichtung zu erzeugen und die erzeugten Lagedaten über das Mobilkommunikationsnetzwerk zu der Kommunikationsvorrichtung zu übertragen.

12. Datenbereitstellungsverfahren nach Anspruch 11, ferner umfassend:
Verwenden von wenigstens einer Datenbereitstellungsvorrichtung nach einem der Ansprüche 1 bis 4;
Wählen mittels der Kommunikationsvorrichtung von einer, zwei oder mehreren der wenigstens einen Datenbereitstellungsvorrichtung unter der wenigstens einen Datenbereitstellungsvorrichtung, die jeweils an der Spezifikationsstelle angeordnet ist, und Empfangen von Daten an der Spezifikationsstelle, die von der wenigstens einen gewählten Datenbereitstellungsvorrichtung akquiriert wurden, mittels der Kommunikationsvorrichtung über das Mobilkommunikationsnetzwerk; und
Erzeugen der Befehlsdaten durch den Server, um die wenigstens eine gewählte Datenbereitstellungsvorrichtung anzuweisen, Daten an der Spezifikationsstelle anzubieten, und Übertragen der Befehlsdaten von dem Server zu der wenigstens einen gewählten Datenbereitstellungsvorrichtung.

13. Datenbereitstellungsverfahren nach Anspruch 11 oder 12, ferner umfassend, mittels des Server:
Daten von der wenigstens einen Datenbereitstellungsvorrichtung und der Kommunikationsvorrichtung über das Mobilkommunikationsnetzwerk zu empfangen;
Landkartendaten betreffende Daten zu speichern;
Daten an Stellen, wo wenigstens eine Datenbereitstellungsvorrichtung und die Kommunikationsvorrichtung angeordnet sind zu akquirieren; und
die akquirierten Lagedaten zu speichern, um so die Lagedaten in Übereinstimmung mit der wenigstens einen Datenbereitstellungsvorrichtung und der Kommunikationsvorrichtung zu bringen.

## Revendications

1. Dispositif de distribution de données, comprenant:
des moyens d'acquisition de données pour acquérir des données auprès d'au moins l'un de moyens de prise d'image (40, 41) pour capturer une image d'un sujet à un emplacement de spécification souhaité et de moyens d'entrée audio (46) pour entrer une entrée audio ;
des moyens de transmission pour transmettre les données de l'emplacement de spécification acquises par les moyens d'acquisition de données à au moins l'un d'un serveur (10) et d'autres dispositifs de communication (30A, 30C) par l'intermédiaire d'un réseau de communication mobile (7) ; et
des moyens de commande pour, lors de la réception de données d'instruction de transmission du serveur (10) demandant aux moyens de transmission de transmettre les données acquises à l'emplacement de spécification, fixer une destination, à laquelle les données acquises à l'emplacement de spécification doivent être transmises, parmi les autres dispositifs de communication (30A, 30C) sur la base des données d'instruction de transmission ;
des moyens d'installation pour installer un corps principal du dispositif de distribution de données dans un véhicule, les moyens d'installation comprenant des moyens de détection d'installation (50) pour détecter l'installation du corps principal du dispositif de distribution de données ;
des moyens de détection d'accident (56) dans au moins l'un des moyens d'installation et du corps principal du dispositif de distribution de données pour détecter un accident associé au véhicule ; et
des moyens d'enregistrement (54) pour enregistrer dans ceux-ci des données d'image acquises par les moyens d'acquisition de données, les moyens d'enregistrement (54) étant montés de manière amovible sur le corps principal du dispositif de distribution de données, dans lequel, lorsque les moyens d'acquisition de données sont disposés de manière à être dirigés dans une direction avant du véhicule et les moyens de détection d'accident (54) détectent des données associées à l'accident, les moyens d'enregistrement enregistrent dans ceux-ci les données d'image ;
dans lequel, lorsque les moyens de détection d'installation (50) détectent que le corps principal du dispositif de distribution de données est installé dans les moyens d'installation, les moyens d'acquisition de données sont mis dans un mode d'offre de données pour offrir les données acquises à l'emplacement de spécification ou dans un mode de demande de données pour demander des données acquises par l'un des autres dispositifs de communication (30A, 30B) à un autre emplacement de spécification.

2. Dispositif de distribution de données selon la revendication 1, dans lequel les moyens de détection d'accident (56) comprennent un système de reconnaissance de son de collision pour entrer des données audio à partir des moyens d'entrée audio (46).

3. Dispositif de distribution de données selon la revendication 2, dans lequel les moyens de détection d'accident (56) génèrent un signal de détection d'accident lorsque le système de reconnaissance de son de collision reconnaît des données audio entrées à partir des moyens d'entrée audio (46) en tant que son de collision.

4. Dispositif de distribution de données selon la revendication 1, dans lequel les moyens d'installation comprennent des moyens d'alimentation électriques (52) pour alimenter en énergie électrique le corps principal du dispositif de distribution de données.

5. Système de distribution de données pour transmettre/recevoir des données par l'intermédiaire d'un réseau de communication mobile (7), comprenant:
le dispositif de distribution de données (30B) selon l'une des revendications 1 à 4 ;
un dispositif de communication (30A) comprenant des moyens de spécification pour spécifier l'emplacement de spécification souhaité sur la base de données liées à une carte, des moyens de réception connectés au réseau de communication mobile (7) pour recevoir des données d'emplacement du dispositif de distribution de données (30B) situé à l'emplacement de spécification spécifié par les moyens de spécification et des moyens de transmission connectés au réseau de communication mobile (7) pour transmettre des données d'instruction générées par les moyens de spécification ; et
un serveur (10) comprenant des moyens de recherche pour rechercher le dispositif de distribution de données (30B) situé à l'emplacement de spécification spécifié par les moyens de spécification du dispositif de communication (30A), des moyens de génération de données d'emplacement pour générer des données d'emplacement du dispositif de distribution de données (30B) recherché par les moyens de recherche et des moyens de transmission connectés au réseau de communication mobile (7) pour transmettre les données d'emplacement générées par les moyens de génération de données d'emplacement au dispositif de communication (30A).

6. Système de distribution de données selon la revendication 5, comprenant :
au moins un dispositif de distribution de données (30B, 30C) selon l'une des revendications 1 à 4, dans lequel :
le dispositif de communication (30A) comprend en outre des moyens de sélection pour sélectionner les un ou deux ou plus desdits au moins un dispositif de distribution de données (30B, 30C) parmi lesdits au moins un dispositif de distribution de données (30B, 30C) situés chacun à l'emplacement de spécification et des moyens de réception connectés au réseau de communication mobile (7) pour recevoir des données de l'emplacement de spécification acquises par les moyens d'acquisition de données de chacun desdits au moins un dispositif de distribution de données (30B, 30C) sélectionnés par les moyens de sélection ;
le serveur (10) comprend en outre des moyens de génération de données d'instruction pour générer les données d'instruction demandant audit au moins un dispositif de distribution de données (30B, 30C) sélectionné par les moyens de sélection du dispositif de communication (30A) d'offrir des données de l'emplacement de spécification ; et
les moyens de transmission du serveur (10) transmettent les données d'instruction générées dans les moyens de génération de données d'instruction audit au moins un dispositif de distribution de données (30B, 30C) sélectionné.

7. Système de distribution de données selon la revendication 5 ou 6, dans lequel le serveur (10) comprend en outre:
des moyens de réception pour recevoir des données, auxquels ledit au moins un dispositif de distribution de données (30B, 30C) et le dispositif de communication (30A) sont connectés par l'intermédiaire du réseau de communication mobile (7) ;
des premiers moyens de mémorisation pour mémoriser dans ceux-ci des données liées à des données de carte ;
des moyens d'acquisition de données d'emplacement pour acquérir des données d'emplacements où ledit au moins un dispositif de distribution de données (30B, 30C) et le dispositif de communication (30A) sont situés ; et
des deuxièmes moyens de mémorisation pour mémoriser dans ceux-ci les données d'emplacement acquises par les moyens d'acquisition de données d'emplacement de manière à ce que les données d'emplacement soient mises en correspondance avec ledit au moins un dispositif de distribution de données (30B, 30C) et le dispositif de communication (30A).

8. Procédé de distribution de données, comprenant les étapes consistant à :
installer un dispositif de distribution de données dans un véhicule ;
acquérir des données en capturant, dans une direction avant du véhicule, une image d'un sujet à un emplacement de spécification souhaité et en entrant une entrée audio ;
transmettre les données acquises à au moins l'un d'un serveur et d'autres dispositifs de communication par l'intermédiaire d'un réseau de communication mobile ;
fixer, lors de la réception de données d'instruction de transmission du serveur demandant de transmettre les données acquises, une destination à laquelle les données acquises à l'emplacement de spécification doivent être transmises, parmi les autres dispositifs de communication sur la base des données d'instruction de transmission ;
détecter si un accident associé au véhicule se produit ; et
enregistrer, en réponse à une détection d'accident associé au véhicule, des données d'image acquises dans des moyens d'enregistrement montés de manière amovible ;
et comprenant en outre les étapes consistant à :
détecter l'installation du dispositif de distribution de données dans le véhicule ; et
fixer, lorsque l'installation du dispositif de distribution de données dans le véhicule est détectée, un mode d'offre de données pour offrir les données acquises à l'emplacement de spécification ou un mode de demande de données pour demander des données acquises par l'un des autres dispositifs de communication à un autre emplacement de spécification.

9. Procédé de distribution de données selon la revendication 8, dans lequel la détection d'accident est effectuée sur la base d'une entrée audio acquise.

10. Procédé de distribution de données selon la revendication 9, dans lequel un signal de détection d'accident est généré lorsqu'une entrée audio est reconnue en tant que son de collision.

11. Procédé de distribution de données selon l'une des revendications 8 à 10,
comprenant, au moyen d'un dispositif de communication, la spécification de l'emplacement de spécification souhaité sur la base de données liées à une carte, la réception, par l'intermédiaire du réseau de communication mobile, de données d'emplacement du dispositif de distribution de données situé à l'emplacement de spécification souhaité et la transmission, par l'intermédiaire du réseau de communication mobile, des données d'instruction ; et
comprenant, au moyen d'un serveur, la recherche du dispositif de distribution de données situé à l'emplacement de spécification spécifié par le dispositif de communication, la génération de données d'emplacement du dispositif de distribution de données tel que recherché et la transmission, par l'intermédiaire du réseau de communication mobile, des données d'emplacement générées au dispositif de communication.

12. Procédé de distribution de données selon la revendication 11, comprenant en outre les étapes consistant à :
utiliser au moins un dispositif de distribution de données selon l'une des revendications 1 à 4 ;
sélectionner, par le dispositif de communication, un ou deux ou plus desdits au moins un dispositif de distribution de données parmi lesdits au moins un dispositif de distribution de données situés chacun à l'emplacement de spécification et recevoir, par le dispositif de communication, par l'intermédiaire du réseau de communication de données, des donnés de l'emplacement de spécification acquises par ledit au moins un dispositif de distribution de données sélectionné ; et
générer, par le serveur, les données d'instruction pour demander audit au moins un dispositif de distribution de données sélectionné d'offrir des données de l'emplacement de spécification et transmettre, par le serveur, les données d'instruction audit au moins un dispositif de distribution de données sélectionné.

13. Procédé de distribution de données selon la revendication 11 ou 12, comprenant en outre, au moyen du serveur, les étapes consistant à :
recevoir des données dudit au moins un dispositif de distribution de données et du dispositif de communication par l'intermédiaire du réseau de communication mobile ;
mémoriser des données liées à des données de carte ;
acquérir des données d'emplacements où au moins un dispositif de distribution de données et le dispositif de communication sont situés ; et
mémoriser les données d'emplacement acquises de manière à ce que les données d'emplacement soient mises en correspondance avec ledit au moins un dispositif de distribution de données et le dispositif de communication.
